# EUROPÄISCHE PATENTSCHRIFT

(11) **EP 3 724 047 B1**
(45) Veröffentlichungstag und Bekanntmachung des Hinweises auf die Patenterteilung: **10.11.2021**
(21) Anmeldenummer: 18830214.5
(22) Anmeldetag: 17.12.2018
(51) Int. Cl.: B60T 15/02, B60T 15/30, B60T 15/42

(54) **STEUERVENTIL MIT BESCHLEUNIGUNGSEINRICHTUNG FÜR DRUCKLUFTBREMSEN VON SCHIENENFAHRZEUGEN**
CONTROL VALVE WITH ACCELERATION DEVICE FOR COMPRESSED AIR BRAKES OF RAIL VEHICLES
DISTRIBUTEUR POURVU D'UN DISPOSITIF D'ACCÉLÉRATION POUR FREINS À AIR COMPRIMÉ DE VÉHICULES FERROVIAIRES

(30) Priorität: 15.12.2017 DE 102017222978; 02.02.2018 DE 102018201653
(43) Veröffentlichungstag der Anmeldung: 21.10.2020
(73) Patentinhaber: KNORR-BREMSE Systeme für Schienenfahrzeuge GmbH, 80809 München (DE)
(72) Erfinder: HELLER, Martin, 85716 Unterschleißheim (DE); LUND, Karsten, 24306 Plön (DE); PETTER, Thomas, 80336 München (DE); PIEPER, Jens-Erik, 80935 München (DE)
(86) Internationale Anmeldenummer: PCT/EP2018/085350
(87) Internationale Veröffentlichungsnummer: WO 2019/115836

(56) Entgegenhaltungen:
- CH-A- 282 593
- CH-A- 345 030
- DE-B1- 2 165 144

## Beschreibung

Die Erfindung betrifft ein Steuerventil mit Beschleunigungseinrichtung für Druckluftbremsen von Schienenfahrzeugen.

Das Einsatzgebiet der Erfindung ist der Schienenfahrzeugbau. Schienenfahrzeuge haben meist eine selbsttätige (automatische) Druckluftbremse, bei der die Absenkung des Druckes in einer Hauptluftleitung, ausgehend von einem Regelbetriebsdruck, die Ausbildung eines Bremszylinderdruckes hervorruft. Die Übertragungsfunktion vom sinkenden Druck in der Hauptluftleitung zum steigenden Bremszylinderdruck und umgekehrt wird von Steuerventilen realisiert.

Da die Druckluft der Hauptluftleitung nicht nur als Arbeitsmedium, sondern auch als Medium zur Signalübertragung, nämlich des Auslösesignals der Bremse, genutzt wird, ist eine möglichst schnelle und gleichmäßige Absenkung des Drucks in der Hauptluftleitung erwünscht, um die Anlegezeit der Bremsen, bzw. die Durchschlagszeit, also die Zeit vom Umlegen des Führerbremsventils bis zum Druckanstieg des Bremszylinders des letzten Wagons, zu verkürzen. Nachteilig für die Signalübertragung stellt sich dabei jedoch die Trägheit der Druckluft in der Hauptluftleitung heraus, was bei schnell geforderten Bremsungen und bei langen Zügen ins Gewicht fällt.

Um in diesen Fällen den Druckabfall in der Hauptluftleitung zu beschleunigen, sind Beschleunigungseinrichtungen als Teilfunktionen des Steuerventils zur Druckabsenkung in der Hauptluftleitung, als zum Stand der Technik gehörend, bekannt:
Die Patentschriften DE 21 65 144 B und DE 21 65 092 B zeigen eine Beschleunigungseinrichtung im Wesentlichen bestehend aus einem Beschleunigungsventil, einer Arretiereinrichtung, zwei Überwachventilen, einer Übertragkammer und zugehörigen Leitungskanälen. Einzelne Funktionen werden dabei durch separate Bauteile übernommen.

Weiter ist aus Patentschrift EP 0 001 131 B1 ein Steuerventil mit einer Beschleunigungseinrichtung und einer zugehörigen Entriegelungseinrichtung bekannt.

Aus der Patentschrift DE 972 887 B ist ein Steuerventil bekannt, das ein Betätigungselement aufweist, das durch einen Bremszylinderdruck gesteuert, eine fluidische Verbindung zwischen einer Steuerkammer und einer Hauptluftleitung einerseits, und zwischen der Hauptluftleitung und einer Entlüftungseinrichtung andererseits herstellt bzw. unterbricht.

Ein Nachteil der Beschleunigungseinrichtungen bzw. der Steuerventile nach dem Stand der Technik sind die zur Funktionserfüllung notwendigen Einrichtungen und Ventile, die zu einer nicht unerheblichen Komplexität und Vielteiligkeit führen. Außerdem sind für die zuverlässige Funktion eine präzise Abstimmung des Zusammenwirkens der einzelnen Elemente, sowie eine hohe Genauigkeit aller Elemente erforderlich.

Es ist Aufgabe der vorliegenden Erfindung, eine Beschleunigungseinrichtung für ein Steuerventil zur Steuerung des Drucks der Hauptluftleitung eines Schienenfahrzeugs zur Verfügung zu stellen, die, gegenüber dem Stand der Technik, eine geringere Anzahl an Bauteilen und somit eine geringere Komplexität aufweist.

Diese Aufgabe wird mittels des unabhängigen Anspruchs gelöst. Vorteilhafte Weiterbildungen sind Gegenstand der Unteransprüche.

Ventile dieser Bauart arbeiten grundsätzlich nach folgendem Prinzip. Eine Hauptluftleitung ist bei gelöster Bremse mit Regelbetriebsdruck beaufschlagt und beaufschlagt einen Druckspeicher und über eine Düse eine Steuerkammer ebenfalls mit Regelbetriebsdruck. Eine Bremsleitung bzw. Bremszylinder des Fahrzeugs sind an die Atmosphäre entlüftet. Die Steuerkammer ist an einer Seite mit einem Kolben verschlossen, welcher von der gegenüberliegenden Seite mit dem Druck der Hauptluftleitung beaufschlagt ist.

Wird bei einer Bremsung die Hauptluftleitung entlüftet, so kann der Druck in der Steuerkammer aufgrund der Düse nicht mit derselben Geschwindigkeit abnehmen wie der Druck der Hauptluftleitung. Wird die Steuerkammer überdies noch durch ein Überwachungsventil gegen die Hauptluftleitung verschlossen, so ist der Regelbetriebsdruck in der Steuerkammer gespeichert und kann als Bezugsgröße verwendet werden. Es stellt sich also eine Druckdifferenz auf beiden Seiten des Kolbens ein, die eine Auslenkung des Kolbens bewirkt. Diese Auslenkung ist umso größer, je geringer der Druck in der Hauptluftleitung ist. Daher wird sie zur Steuerung der Bremskraft bzw. des Bremsdrucks verwendet. Ventile dieser Bauart sind dazu ausgebildet, entsprechend der Auslenkung bzw. entsprechend des Druckunterschieds der Steuerkammer zur Hauptluftleitung, aus dem Druckspeicher Druckluft in die Bremsleitung bzw. die Bremszylinder zu leiten, um dadurch eine Bremswirkung zu erzielen.

Erfindungsgemäß ist das Funktionsprinzip der beschleunigten Entlüftung der Hauptluftleitung mit einem zentralen, vorzugsweise in einem Gehäuse des Steuerventils verschiebbaren Betätigungselement realisiert.

Dieses Betätigungselement steht vorzugsweise mit einem Druck-Kraft/Weg-Umformer in Verbindung, wodurch an das Betätigungselement ein Betätigungssignal übertragen werden kann. Dieses Signal entspricht im Wesentlichen einer Kraft, welche ab einer bestimmten Schwelle das Betätigungselement in Bewegung versetzt.

Vorzugsweise erhält der Druck-Kraft/Weg-Umformer über eine Druckluftverbindung einen Druck wenigstens eines Bremszylinders oder einer Bremsleitung oder einen diesen vorsteuernden, ggf. zeitlich beeinflussenden Druck. Dieser ist dazu ausgebildet, auf Basis dieser Information ein Betätigungssignal an das Betätigungselement zu übermitteln.

In einer anderen vorteilhaften Ausführungsform der Erfindung wird dem DruccKraft/Weg-Umformer ein Differenzdruck gegenüber dem Regelbetriebsdruck der Hauptluftleitung zugeführt. Auf Basis dieser Information wird ein Betätigungssignal an das Betätigungselement übermittelt.

Vorzugsweise ist das Betätigungssignal des Druck-Kraft/Weg-Umformers mechanisch und/oder pneumatisch ausgebildet.

Das Betätigungselement ist vorzugsweise derart ausgebildet, dass es seinerseits durch seine Bewegung ein erstes Schaltorgan und ein zweites Schaltorgan schaltet bzw betätigt.

Vorzugsweise schaltet das Betätigungselement das erste Schaltorgan und das zweite Schaltorgan zwischen mindestens zwei Betriebsstellungen um.

Das erste Schaltorgan weist vorzugsweise fluidische Verbindungen zur Hauptluftleitung und zur Atmosphäre und/oder zu einer Entlüftungseinrichtung auf. Bei einem entsprechenden Signal stellt es eine Verbindung der Hauptluftleitung mit der Atmosphäre her, so dass die Hauptluftleitung, zusätzlich zur normalen Entlüftung, eine weitere Verbindung zur Atmosphäre erhält. Dadurch vergrößert sich der effektive Entlüftungsquerschnitt der Hauptluftleitung, wodurch sich eine Beschleunigung der Entlüftung der Hauptluftleitung einstellt. Ein zweites Signal bewirkt vorzugsweise, dass sich eine Arretierung innerhalb des Schaltorgans löst und dieses wieder in die Schließstellung übergeht, wodurch die fluidische Verbindung wieder unterbrochen wird.

Das zweite Schaltorgan weist vorzugsweise fluidische Verbindungen zur Hauptluftleitung und zu einer Steuerkammer auf. Bei einem entsprechenden Signal unterbricht es eine Verbindung der Steuerkammer mit der Hauptluftleitung, so dass die Steuerkammer nicht weiter über die Hauptluftleitung entlüftet, bzw. mit dieser verbunden ist. Bei einem weiteren Signal stellt es die Verbindung wieder her. Dadurch wird sichergestellt, dass in der Steuerkammer der Regelbetriebsdruck gespeichert wird.

Das erste Schaltorgan hat somit die Betriebsstellungen "beschleunigte Entlüftung der Hauptluftleitung", bei der die Hauptluftleitung mit der Atmosphäre, oder einer geeigneten Entlüftungseinrichtung verbunden ist, und "keine beschleunigte Entlüftung der Hauptluftleitung", bei der die Hauptluftleitung nicht mit der Atmosphäre, oder einer geeigneten Entlüftungseinrichtung verbunden ist.

Das zweite Schaltorgan hat somit die Betriebsstellungen "Steuerkammer in Verbindung mit der Hauptluftleitung", bei der die Steuerkammer mit der Hauptluftleitung verbunden ist, und "Steuerkammer gegen Hauptluftleitung abgesperrt", bei der die Steuerkammer nicht mit der Hauptluftleitung, verbunden ist.

Zur Beendigung der beschleunigten Entlüftung der Hauptluftleitung ist das Betätigungselement vorzugsweise so ausgeführt, dass es eine geschlossene Stellung des ersten Schaltorgans herbeiführt, wobei die Verbindung der Hauptluftleitung von der Atmosphäre getrennt ist.

Vorzugsweise übernimmt das Betätigungselement sowohl die Betätigung, insbesondere Arretierung und Freigabe des ersten Schaltorgans, als auch die Betätigung des zweiten Schaltorgans.

Vorzugsweise beinhaltet das Steuerventil ein als Beschleunigungseinrichtung ausgebildetes erstes Schaltorgan mit einem Beschleunigungsventil, welches bei Öffnung eine zusätzliche Entlüftungsöffnung der Hauptluftleitung darstellt und eine Arretiereinrichtung, welche vorzugsweise aufgrund des Drucks im Bremszylinder den Beschleunigungsvorgang steuert, bzw. beendet.

Vorzugsweise ist die Beschleunigungseinrichtung durch zwei Räume ausgebildet. Der erste Raum steht dabei mit der Hauptluftleitung in Verbindung, der zweite Raum verfügt über einen Auslass zur Atmosphäre. Beide Räume sind durch ein Beschleunigungsventil voneinander getrennt und stehen bei geöffnetem Beschleunigungsventil miteinander in Verbindung.

Vorzugsweise ist dieses Beschleunigungsventil als Kombination eines Ventiltellers mit einem Ventilsitz einer Steuerhülse ausgeführt. Der Ventilsitz ist dabei an einem Ende der Steuerhülse vorgesehen, das dem Ventilteller zugewandt ist. Ventilteller und Steuerhülse sind gegeneinander in Richtung der Längsachse der Steuerhülse, insbesondere translatorisch, verschiebbar. Die Längsachse der Steuerhülse beschreibt dabei eine gedachte Linie vom Ventilsitz der Steuerhülse bis zu ihrem Ende, das dem Ventilsitz gegenüber liegt.

In einer anderen, nicht gezeigten, vorteilhaften Ausführungsform ist der Ventilteller gegenüber der Steuerhülse schwenkbar ausgeführt, wodurch eine Öffnungsbewegung des Beschleunigungsventils mittels einer Schwenkbewegung des Ventiltellers weg von der Steuerhülse erfolgt. Diese Ausführungsform hat den Vorteil, dass das Beschleunigungsventil weniger Bauraum beansprucht, als einer translatorischen Verschiebung.

Vorzugsweise ist bei dieser Ausführungsform das Beschleunigungsventil mit einer Ventildichtung versehen, welche derart gestaltet ist, dass das Beschleunigungsventil bei beliebigen Schwenkwinkeln des Ventiltellers wieder zuverlässig verschlossen wird. Dies kann beispielsweise durch eine sehr weiche und dicke Dichtschicht zwischen Ventilteller und Steuerhülse erreicht werden.

Vorzugsweise ist die Steuerhülse rotationssymmetrisch ausgeführt, wobei sich die Rotationssymmetrie auf die Längsachse der Steuerhülse bezieht. Die Rotationssymmetrie erlaubt dabei eine einfache und kostengünstige Fertigung der Steuerhülse vor allem in der Serienfertigung.

Vorzugsweise bildet das Innere der Steuerhülse die Verbindung der beiden Räume der Beschleunigungseinrichtung.

Vorzugsweise stützt sich die Steuerhülse über eine Feder so an der Gehäusewand ab, dass bei zusammengedrückter Feder eine Kraft auf die Steuerhülse in Richtung des Ventiltellers wirkt. Die Feder ist dabei so bemessen, dass sie die Steuerhülse entgegen auftretender Reib- und Druckkräfte auf den Ventilteller zu bewegen kann und mit diesem und dem Ventilsitz der Steuerhülse einen dichten Abschluss realisiert.

Vorzugsweise sind Ventilteller und Steuerhülse über geeignete Führungen im Gehäuse gelagert, so dass sich nur translatorische Verschiebungen in Richtung der Längsachse der Steuerhülse ergeben.

In einer weiteren vorteilhaften Ausführungsform der Erfindung verfügt die Steuerhülse über eine Verengung ihres inneren Kanals in Form einer Düse, um die Durchströmung der Steuerhülse zu kontrollieren. Dabei ist die Größe der Düse derart bemessen, dass sich die geforderte Entlüftungsleistung einstellt.

Vorzugsweise sind bei geöffnetem Beschleunigungsventil Ventilteller und Ventilsitz der Steuerhülse voneinander gelöst. Dadurch ergibt sich eine Verbindung der Hauptluftleitung durch den ersten Raum, den Ventilsitz der Steuerhülse, die Steuerhülse selbst und ihre Düse, die Windungen der Feder, den zweiten Raum bis hin zur Atmosphäre.

In einer anderen vorteilhaften Ausführungsform der Erfindung wird die Feder, auf der sich die Steuerhülse im Gehäuse abstützt, nicht durchströmt, so dass keine Veränderung des effektiven Querschnittes aufgrund sich setzender oder entspannender Federwindungen entsteht, wodurch die Auslegung hinsichtlich Durchströmung der Beschleunigungseinrichtung erleichtert wird.

Vorzugsweise weist der Ventilteller eine starre mechanische Verbindung mit einem Kolben einer Steuerkammer des Steuerventils auf, wodurch ein Hub dieses Kolbens, bei Entlüften der Hauptluftleitung zu einem Hub des Ventiltellers führt.

In einer anderen vorteilhaften Ausführungsform der Erfindung ist die Verbindung zwischen Kolben der Steuerkammer und Ventilteller mittels einer Übersetzung realisiert. Dadurch entsprechen sich die Hübe des Kolbens der Steuerkammer und Ventilteller nicht mehr im Verhältnis 1:1, sondern können beliebig davon abweichen. Dies hat den Vorteil, dass bei der konstruktiven Gestaltung der Beschleunigungseinrichtung z.B. ein benötigter großer Hub des Ventiltellers, durch einen, aus Bauraumgründen nur kleinen Hub des Kolbens der Steuerkammer erreicht werden kann, oder umgekehrt.

Vorzugsweise weist der Druck-Kraft/Weg-Umformer eine Arretiereinrichtung auf, welche eine Rückkopplung des Systems bildet, indem sie den Beschleunigungsvorgang aufgrund des Drucks im Bremszylinder, oder einem diesen vorsteuernden, ggf. zeitlich beeinflussenden Druck steuert.

Vorzugsweise befindet sich die Arretiereinrichtung in einer Kammer, welche mit dem Druck des Bremszylinders, oder einem diesen vorsteuernden, ggf. zeitlich beeinflussenden Druck, in Verbindung steht.

Vorzugsweise wird die Kammer durch einen Steuerkolben so unterteilt, dass zwei Räume gebildet werden, wobei der erste Raum mit dem Druck des Bremszylinders, oder einem diesen vorsteuernden, ggf. zeitlich beeinflussenden Druck, in Verbindung steht und der zweite Raum von dem ersten Raum isoliert ist.

Vorzugsweise ist der Steuerkolben als Kolben mit gleitender Abdichtung zur Wand der Kammer der Arretiereinrichtung ausgebildet.

In einer anderen vorteilhaften Ausführungsform ist der Steuerkolben als Membrankolben ausgeführt, wobei die Membran fest mit der Wand der Kammer der Arretiereinrichtung verbunden ist.

Vorzugsweise stützt sich der Steuerkolben in der isolierten Kammer mit einer Feder im Gehäuse derart ab, dass der Steuerkolben bei zusammengedrückter Feder eine Kraft in Richtung des ersten Raums erfährt.

Vorzugsweise ist mit dem Steuerkolben ein, insbesondere verschiebbarer, Arretierstift verbunden, dessen Längsachse im Wesentlichen rechtwinklig zur Längsachse der Steuerhülse ausgerichtet ist.

Vorzugsweise schneidet die Verlängerung der Längsachse des Arretierstiftes die Längsachse der Steuerhülse.

In einer weiteren vorteilhaften Ausführungsform der Erfindung bilden die beiden Längsachsen von Arretierstift und Steuerhülse ein windschiefes Geradenpaar. Vorzugsweise ist der Arretierstift rotationssymmetrisch bzgl. seiner Längsachse ausgeführt, wodurch eine einfache und kostengünstige Fertigung des Arretierstiftes sichergestellt ist.

Vorzugsweise werden der Steuerkolben und der Arretierstift derart im Gehäuse geführt, dass sie axial, entlang der Längsachse des Arretierstiftes verschiebbar sind.

Vorzugsweise verfügt die Beschleunigungseinrichtung über eine geeignete Öffnung, durch die der Arretierstift hindurch geführt wird, so dass er mit seinem ersten Ende, welches in die Beschleunigungseinrichtung ragt, durch die Kraft der Feder, welche sich in dem zweiten Raum der Arretiereinrichtung am Gehäuse abstützt und auf den Steuerkolben drückt, auf die Seitenfläche der Steuerhülse gepresst wird. Dieser Kontakt ist derart bemessen, dass sich eine reibschlüssige Verbindung ausbildet, wodurch die Steuerhülse an der axialen Verschiebung, entlang ihrer Längsachse, gehindert wird. Dabei ist die Haltekraft des Arretierstiftes stark genug, um die Verschiebung der Steuerhülse aufgrund ihrer Feder, auf der die Steuerhülse im Gehäuse gelagert ist, zu verhindern.

In einer weiteren vorteilhaften Ausführungsform erfolgt die Arretierung der Steuerhülse kraft- und formschlüssig, oder rein formschlüssig.

Durch einen formschlüssig ausgebildeten Kontakt ist gewährleistet, dass sich der Kontakt zwischen Arretierstift und Steuerhülse nicht aufgrund von Stößen aus dem Fahrbetrieb frühzeitig löst, wodurch eine frühzeitige Schließung des Beschleunigungsventils und damit eine zu frühe Beendigung des Beschleunigungsvorganges vermieden oder zumindest verhindert wird.

Eine form- und kraftschlüssige Ausbildung des Kontakts kann durch eine sich in Richtung des Ventiltellers verjüngende Fläche auf der Steuerhülse erreicht werden, wobei das erste Ende des Arretierstiftes entsprechend ausgebildet ist, um vorzugsweise vollflächig mit dieser Fläche der Steuerhülse in Kontakt zu treten.

Vorzugsweise ist die Steuerhülse dazu mindesten über einen Teilbereich der Oberfläche konisch ausgebildet.

Eine rein formschlüssige Verbindung kann vorzugsweise mittels einer Aussparung erreicht werden, welche zumindest über einen Teil der Oberfläche der Steuerhülse verläuft und in die das erste Ende des Arretierstiftes zur Arretierung eingreift.

Vorzugsweise ist die Feder des Steuerkolbens derart ausgebildet, dass sie bei einem bestimmten Druck, insbesondere einem kleinstmöglichen Druck des Bremszylinders, oder einem diesen vorsteuernden, ggf. zeitlich beeinflussenden Druck, auf den Steuerkolben, bei dem vorzugsweise eine Bremswirkung eintritt, eine Verschiebung des Steuerkolbens und somit des Arretierstiftes, weg von der Steuerhülse zulässt, wodurch der Kontakt zwischen Arretierstift und Steuerhülse gelöst wird und die Steuerhülse axial, entlang ihrer Längsachse, verschiebbar wird.

Somit ist sichergestellt, dass der Beschleunigungsvorgang zu Beginn der Druckbeaufschlagung des Bremszylinders beendet wird, da das Beschleunigungsventil bei Freigabe der Steuerhülse durch Ventilteller und Ventilsitz der Steuerhülse geschlossen wird. Dadurch ist sichergestellt, dass bei kleinen Drücken im Bremszylinder keine weitere Entlüftung der Hauptluftleitung durch ein ungewollt geöffnetes Beschleunigungsventil stattfindet. Das Beschleunigungsventil bleibt auch in der Folge durch das Anpressen des Ventilsitzes der Steuerhülse an den Ventilteller mittels der Feder, auf der die Steuerhülse ruht, geschlossen, so dass ein Nachbremsen stets ohne ein erneutes Öffnen des Beschleunigungsventils erfolgt.

Vorzugsweise wird das zweite Ende des Arretierstiftes aus der Arretiereinrichtung, besonders bevorzugt aus dem zweiten Raum, herausgeführt.

Vorzugsweise ist dieses zweite Ende als Ventildichtung ausgeführt, welche mit einem Ventilsitz korrespondiert, wodurch ein Überwachventil gebildet wird, welches dazu ausgebildet ist, eine Steuerkammer von der Hauptluftleitung zu trennen bzw. diese wieder zu verbinden.

Vorzugsweise wird dieses Ventil geschlossen, wenn sich der Steuerkolben aufgrund eines gestiegenen Bremszylinderdrucks, oder eines diesen vorsteuernden, ggf. zeitlich beeinflussenden Drucks, und damit der Arretierstift weg von der Steuerhülse bewegen. Dadurch wird zugleich die Verbindung zwischen Steuerhülse und Arretierstift gelöst.

Vorzugsweise befindet sich dieses Überwachventil in einer Verbindungskammer, welche mit der Hauptluftleitung in Verbindung steht und ist als Teil des zweiten Schaltorgans ausgebildet.

Vorzugsweise ist in der Zuleitung zu diesem Überwachventil eine Verengung in Form einer Düse vorgesehen, welche ein Ausströmen von Druckluft aus der Steuerkammer in die Hauptluftleitung verlangsamt, so dass der Druck in der Steuerkammer dem Druck der Hauptluftleitung nicht unmittelbar, sondern nur verzögert, folgen kann.

Vorzugsweise ist die Steuerkammer selbst an einer Seite mit dem Kolben der Steuerkammer verschlossen, welcher mit dem Druck der Steuerkammer und mit seiner anderen Seite mit dem Druck der Hauptluftleitung beaufschlagt ist und welcher eine Verbindung zum Ventilteller der Beschleunigungseinrichtung aufweist.

In einer weiteren vorteilhaften Ausführungsform der Erfindung stützt sich der Kolben der Steuerkammer mit der Seite, welche mit der Hauptluftleitung korrespondiert, zusätzlich über eine Feder im Gehäuse ab. Die Feder ist derart gestaltet, dass sie eine Kraft auf den Kolben der Steuerkammer ausübt, welche in Richtung der Steuerkammer gerichtet ist, wodurch der Kolben der Steuerkammer in Richtung Steuerkammer gedrückt wird.

Vorzugsweise sind die Federn am Kolben der Steuerkammer und an der Steuerhülse derart aufeinander abgestimmt, dass der Komplex Kolben der Steuerkammer, mechanische Verbindung, Ventilteller bis hin zur Steuerhülse, bei gelöster Bremse, eine vordefinierte Stellung einnimmt.

Vorzugsweise ist eine Verbindung zwischen dem Kolben der Steuerkammer und dem Ventilteller vorgesehen, wobei die Verbindung als starre mechanische Verbindung, oder als mechanische Übersetzung zwischen der Bewegung des Kolbens der Steuerkammer und dem Ventilteller, oder als Stößelverbindung ausgeführt ist.

Vorzugsweise bildet ein Stößel mit dem Ventilteller oder mit dem Kolben der Steuerkammer eine feste Verbindung aus wobei der Stößel an den jeweils anderen ab einer vorbestimmten Verschiebung stößt und anschließend diesen mit verschiebt.

Vorzugsweise weisen Ventilteller und Kolben eine gemeinsame Achse auf, entlang derer sie verschiebbar ausgebildet sind.

Vorzugsweise ist der Kolben der Steuerkammer als Membrankolben ausgeführt, wobei die Membran fest mit der Gehäusewand der Steuerkammer verbunden ist.

In einer weiteren vorteilhaften Ausführungsform der Erfindung wird die Steuerkammer nicht durch einen Membrankolben, sondern durch einen Kolben mit gleitender Abdichtung verschlossen, wodurch die Montage des Ventils mit geringerem Aufwand erfolgen kann. Im Übrigen erfüllt dieser Kolben die gleiche Funktionalität wie der Membrankolben.

Vorzugsweise ist weiterhin das Ventil der Beschleunigungseinrichtung des ersten Schaltorgans dazu ausgebildet ist, direkt oder über zwischengeschaltete Elemente über eine Feder mit einer elastischen Vorspannkraft verschlossen zu werden.

In einer anderen vorteilhaften Ausführungsform ist die Steuerhülse zweistückig ausgebildet, wobei ein erster Teil dazu ausgebildet ist, sich auf der Feder im Gehäuse abzustützen und mit dem ersten Ende des Arretierstiftes in Kontakt zu treten. Ein zweiter Teil ist dazu ausgebildet, sich auf einer weiteren Feder im Gehäuse abzustützen, die den zweiten Teil in Richtung des Ventiltellers mit einer Kraft beaufschlagt und den Ventilsitz in Richtung des Ventiltellers treibt, wobei eine Verbindung zwischen beiden Teilen ausgebildet ist, die eine beschränkte Relativbewegung in Richtung des Ventiltellers und von diesem weg erlaubt.

So wird vorteilhafterweise erreicht, dass das Ventil der Beschleunigungseinrichtung bzw. des ersten Schaltorgans durch die elastische Vorspannkraft sicher gegen Druckschwankungen in der Hauptluftleitung und der Steuerkammer sowie gegen Stöße aus dem Fahrbetrieb des Schienenfahrzeugs verschlossen ist, so dass eine unerwünschte Öffnung des Ventils und damit eine unerwünschte Entlüftung der Hauptluftleitung verhindert oder zumindest erschwert wird.

Vorzugsweise verfügen die beschriebenen Räume über keine weiteren Verbindungen, als die zuvor beschriebenen. Elemente, welche von einem Raum in einen anderen geführt sind, wie z.B. der Arretierstift, verfügen an den Übergangsstellen über gleitende Abdichtungen, so dass über diese Verbindungen kein Druckausgleich zwischen einzelnen Räumen stattfinden kann.

Weitere vorteilhafte Ausführungsformen der Erfindung können durch Kombination mindestens zweier zuvor beschriebener Ausführungsformen erhalten werden.

In einer weiteren Ausführungsform der Erfindung ist ein Schienenfahrzeug mit einer pneumatischen Bremsanlage vorgesehen, die ein oben beschriebenes Steuerventil aufweist.

Im Folgenden erfolgt die Beschreibung der Erfindung anhand eines bevorzugten Ausführungsbeispiels unter Bezugnahme auf die beigefügte Zeichnung.

Im Einzelnen zeigt:
Fig. 1 eine Darstellung des allgemeinen Funktionsprinzips der Erfindung
Fig. 2 ein erstes Funktionsschema einer Ausführungsform der Erfindung
Fig. 3 ein zweites Funktionsschema einer weiteren Ausführungsform der Erfindung.

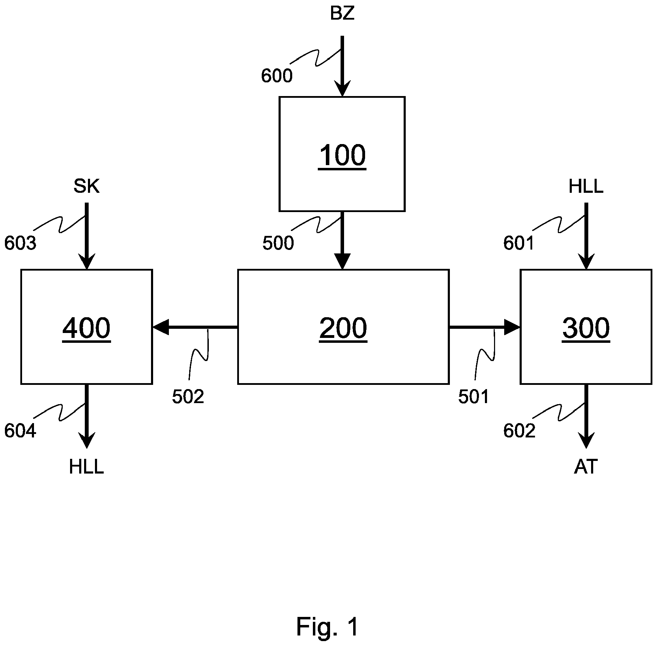

In **Fig. 1** ist ein Betätigungselement 200 gezeigt, das mit einem Druck-Kraft/Weg-Umformer 100 in Verbindung steht, wodurch an das Betätigungselement 200 ein Signal 500 übertragen werden kann. Dieses Signal 500 entspricht im Wesentlichen einer Kraft, welche ab einer bestimmten Schwelle das Betätigungselement 200 in Bewegung versetzt, also betätigt.

Der Druck-Kraft/Weg-Umformer 100 erhält über eine Druckluftverbindung 600 einen Druck eines Bremszylinders BZ, oder einer Bremsleitung, oder einen diesen vorsteuernden, ggf. zeitlich beeinflussenden Druck. Auf Basis dieser Information wird das Signal 500 an das Betätigungselement 200 übermittelt.

Das Betätigungselement 200 ist derart ausgebildet, dass es seinerseits mechanisch ein erstes Schaltorgan 300 und ein zweites Schaltorgan 400 schaltet. Das Schalten wird über Signale 501, 502 realisiert.

Das erste Schaltorgan 300 weist eine Druckluftverbindung 601 zur Hauptluftleitung HLL und eine Druckluftverbindung 602 zur Atmosphäre AT, oder alternativ zu einer Entlüftungseinrichtung auf. Zur beschleunigten Entlüftung der Hauptluftleitung HLL stellt das erste Schaltorgan 300 eine Verbindung dieser Verbindungen 601, 602 her, so dass die Hauptluftleitung HLL, zusätzlich zur normalen Entlüftung, welche hier nicht dargestellt ist, eine weitere Verbindung zur Atmosphäre AT oder einer Entlüftungseinrichtung erhält. Dadurch vergrößert sich der effektive Entlüftungsquerschnitt der Hauptluftleitung HLL, wodurch sich eine Beschleunigung der Entlüftung der Hauptluftleitung HLL einstellt.

Zur Beendigung der beschleunigten Entlüftung der Hauptluftleitung HLL unterbricht das erste Schaltorgan 300 bei einem entsprechenden Signal 501 diese Verbindung wieder.

Das zweite Schaltorgan 400 weist eine Druckluftverbindung 604 zur Hauptluftleitung HLL und eine Druckluftverbindung 603 zur Steuerkammer SK auf. Bei einem entsprechenden Signal 502 unterbricht es eine Verbindung der Steuerkammer SK mit der Hauptluftleitung HLL, so dass die Steuerkammer SK, nicht weiter über die Hauptluftleitung HLL entlüftet. Dadurch wird sichergestellt, dass in der Steuerkammer SK ein Regelbetriebsdruck, oder zumindest ein vergleichbarer Druck gespeichert wird. Erfindungsgemäß übernimmt das Betätigungselement 200 sowohl die Unterbrechung des ersten Schaltorgans 300, als auch die Betätigung des zweiten Schaltorgans 400.

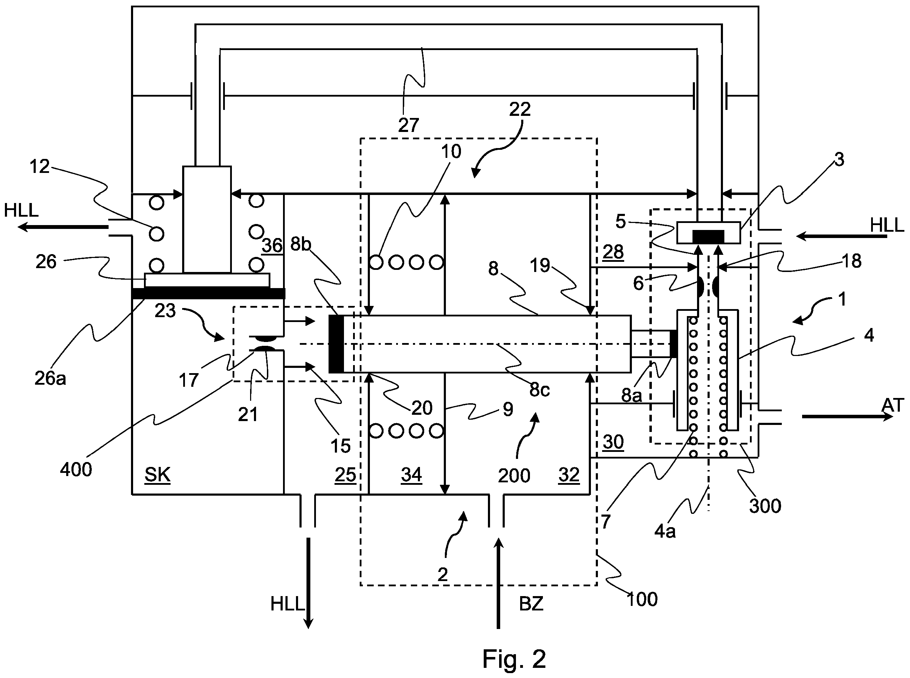

**Fig. 2** zeigt ein Funktionsschema einer Ausführungsform der Erfindung als Teil eines Steuerventils einer Druckluftbremse für ein Schienenfahrzeug, wobei lediglich die Umsetzung der Beschleunigungsfunktion und der dafür benötigten Komponenten gezeigt ist.

Das Steuerventil weist eine Beschleunigungseinrichtung 1 auf. Diese verfügt über zwei Räume, wobei der erste Raum 28 einen Anschluss zur Hauptluftleitung HLL und der zweite Raum 30 einen Auslass zur Atmosphäre AT aufweist.

In dem ersten Raum 28 ist ein Ventilteller 3 vorgesehen, welcher über eine Verbindung 27 mit einem Kolben 26 einer Steuerkammer SK verbunden ist. Ventilteller 3 und Kolben 26 sind gegenüber dem Gehäuse des Steuerventils derart gelagert, dass sie lediglich translatorische Verschiebungen, in der dargestellten Ausführungsform nach oben oder unten, durchführen können. Ein Hub des Kolbens 26 entspricht in dieser Ausführungsform einem Hub des Ventiltellers 3. Der Kolben 26 ist in dieser Ausführungsform als Membrankolben mit einer Membrandichtung 26a ausgeführt.

Durch die Trennwand der beiden Räume 28, 30 der Beschleunigungseinrichtung 1 ist eine Steuerhülse 4 derart geführt, dass sie entlang ihrer Längsachse 4a translatorisch verschoben werden kann. Beide Räume 28, 30 der Beschleunigungseinrichtung 1 sind durch eine gleitende Abdichtung 18 an der Durchtrittsstelle der Steuerhülse 4 voneinander isoliert.

Die Steuerhülse 4 verfügt an dem Ende, welches in den ersten Raum 28 reicht, über einen Ventilsitz 5. Die Steuerhülse 4 stützt sich in dem zweiten Raum 30 mittels einer Feder 7 im Gehäuse der Beschleunigungseinrichtung 1 in Richtung des Ventiltellers 3 ab. Innerhalb der Steuerhülse 4 ist eine Düse 6 vorgesehen, welche den Querschnitt der, hohlen Steuerhülse 4 entlang der Achse 4a verengt und anschließend wieder aufweitet.

Es besteht also eine Möglichkeit, die Hauptluftleitung HLL über den ersten Raum 28, den Ventilsitz 5, die Düse 6, die Steuerhülse 4 die Feder 7 und den zweiten Raum 30 an die Atmosphäre AT zu entlüften.

Dem Ventilsitz 5 der Steuerhülse 4 gegenüber ist der Ventilteller 3 so angeordnet, dass er zusammen mit dem Ventilsitz 5 das Beschleunigungsventil 3, 5 bildet.

In der Zeichnung links neben der Beschleunigungseinrichtung 1 ist die Arretiereinrichtung 2 angeordnet.

Diese besteht aus eine Kammer 22, welche mit dem Bremszylinderdruck BZ in Verbindung steht. Alternativ kann statt dem Bremszylinderdruck BZ der Kammer 22 auch ein den Bremszylinderdruck BZ vorsteuernder, ggf. zeitlich beeinflussender Druck zugeführt werden.

In der Kammer 22 befindet sich ein Steuerkolben 9, welcher die Kammer 22 in zwei Räume unterteilt, wobei nur der erste Raum 32 der Arretiereinrichtung 2 mit dem Bremszylinderdruck BZ gespeist wird. Der zweite Raum 34 der Arretiereinrichtung 2 ist durch den Steuerkolben 9 vom Bremszylinderdruck abgetrennt.

Der zweite Raum 34 beinhaltet eine Feder 10 über die sich der Steuerkolben 9 mit seiner, in der Zeichnung, linken Seite im Gehäuse abstützt. Der Steuerkolben 9 ist somit von links mit der Kraft der Feder 10 und von rechts mit dem Bremszylinderdruck BZ beaufschlagt.

Der Steuerkolben 9 ist fest mit einem Arretierstift 8 verbunden, dessen Längsachse 8c zur Längsachse 4a der Steuerhülse 4 rechtwinklig angeordnet ist. Der erste Raum 32 der Arretiereinrichtung 2 beinhaltet an der rechten Seite eine Öffnung mit einer gleitenden Abdichtung 19 durch die der Arretierstift 8 in den zweiten Raum 30 der Beschleunigungseinrichtung 1 reicht. Durch die gleitende Abdichtung 19 ist sichergestellt, dass zwischen dem ersten Raum 32 der Arretiereinrichtung 2 und dem zweiten Raum 30 der Beschleunigungseinrichtung 1 kein Druckausgleich stattfindet.

In der dargestellten Ausführungsform sind Arretierstift 8 und Steuerhülse 4 derart zueinander orientiert, dass sich die Verlängerungen ihrer Längsachsen 4a, 8c in einem rechten Winkel schneiden.

Der Arretierstift 8 erfährt in der dargestellten Ausführungsform durch die Feder 10 über den Steuerkolben 9 eine Kraft nach rechts, wodurch sein erstes Ende 8a, welches in den zweiten Raum 30 der Beschleunigungseinrichtung 1 ragt, auf die Außenfläche der Steuerhülse 4 gepresst wird. Die Anpresskraft ist dabei so stark, dass diese die Steuerhülse 4, entgegen der Kraft der Feder 7 festzuhalten vermag.

In der dargestellten Ausführungsform schließt sich links der Arretiereinrichtung 2 eine Verbindungskammer 25 an, welche mit der Hauptluftleitung HLL in Verbindung steht. Ein zweites Ende 8b des Arretierstiftes 8, welches nicht in die Beschleunigungseinrichtung 1 geführt ist, ragt durch eine Öffnung mit gleitender Abdichtung 20 in diese Verbindungskammer 25. Zwischen der zweiten Kammer 34 der Arretiereinrichtung 2 und der Verbindungskammer 25 findet aufgrund der gleitenden Abdichtung 20 kein Druckausgleich statt.

Das zweite Ende 8b des Arretierstiftes 8 ist in Form einer Ventildichtung ausgeführt. Dieser Ventildichtung gegenüber ist ein Ventildichtsitz 15 angeordnet. Der Ventildichtsitz 15 korrespondiert dabei mit einem Leitungskanal 17 in dem eine Düse 21 vorgesehen ist.

Durch Ventildichtung, Ventildichtsitz 15, Leitungskanal 17 und Düse 21 wird das Überwachventil 23 gebildet, welches dazu ausgebildet ist, die Steuerkammer SK mit der Verbindungskammer 25 und somit der Hauptluftleitung HLL zu verbinden bzw. davon zu trennen.

In der dargestellten Ausführungsform ist links der Verbindungskammer 25 die Steuerkammer SK beispielhaft angeordnet. Die Steuerkammer SK wird an ihrem oberen Ende durch einen Kolben 26 verschlossen, welcher sich auf seiner, der Steuerkammer SK abgewandten Seite, mittels einer Feder 12 im Gehäuse abstützt. Die Feder 12 befindet sich dabei in einem Raum 36 hinter der Steuerkammer SK, welcher mit der Hauptluftleitung HLL in Verbindung steht. Die Seite des Kolbens 26 die diesem Raum 36 zugewandt ist, ist zusätzlich zur Kraft der Feder 12 mit dem Druck der Hauptluftleitung HLL beaufschlagt. Auf der, der Steuerkammer SK zugewandten Seite ist der Kolben 26 mit dem Druck der Steuerkammer SK beaufschlagt.

In dieser konkreten Ausführungsform lassen sich die Elemente aus Fig. 1 wie folgt definieren.

Der Druck-Kraft/Weg-Umformer 100 ist durch einen gestrichelten Kasten in Fig. 2 umrahmt. Erweist den Steuerkolben 9, die Kammern 32, 34, die Feder 10 sowie einen Anschluss auf, um mit dem Druck eines Bremszylinders BZ beaufschlagt zu werden.

Das erste Schaltorgan 300, markiert durch einen gestrichelten Kasten in Fig. 2, wird gebildet durch den ersten Raum 28, welcher eine fluidische Verbindung zur Hauptluftleitung HLL aufweist, den zweiten Raum 30, welcher eine fluidische Verbindung zur Atmosphäre AT aufweist, den Ventilteller 3, die Steuerhülse 4, den Ventilsitz 5, die Düse 6 und die Feder 7.

Das zweite Schaltorgan 400, markiert durch einen gestrichelten Kasten in Fig. 2, wird gebildet durch die Kammer 25, die eine fluidische Verbindung zur Hauptluftleitung HLL aufweist, den Ventilsitz 15, das zweite Ende 8b des Arretierstiftes 8, den Leitungskanal 17 und die Düse 21. Wesentlicher Bestandteil des zweiten Schaltorgans 400 ist das Überwachungsventil 23.

Das Betätigungselement 200 weist hier den Arretierstift 8 auf, welcher zur Übertragung mechanischer Signale in Form von Verschiebungen seiner beiden Enden 8a, 8b ausgebildet ist.

Die in der Zeichnung dargestellte Konstellation entspricht einem Zustand, in dem das Steuerventil nicht betätigt ist und somit keine Bremsung ausgelöst wurde. Nachfolgend wird die Funktion der beschleunigten Druckabsenkung der HLL beschrieben und der damit verbundene Betriebsablauf des Steuerventils dieser Ausführungsform beschrieben.

In der dargestellten Konstellation ist die Hauptluftleitung HLL mit Druckluft auf Regelbetriebsdruck beaufschlagt. In der Steuerkammer SK herrscht aufgrund des geöffneten Überwachventils 23 derselbe Druck wie in der Hauptluftleitung HLL. Der Bremszylinder BZ ist nicht mit Druckluft beaufschlagt, wodurch auch der erste Raum 32 der Arretiereinrichtung 2 nicht mit Druckluft beaufschlagt ist. Beispielsweise ist der Bremszylinder BZ an die Atmosphäre AT entlüftet, so dass in dem Raum 32 Atmosphärendruck herrscht.

Dadurch ist das erste Ende 8a des Arretierstiftes 8 an die Außenfläche der Steuerhülse 4 gepresst und hält diese fest.

Durch das Auslösen eines Bremsvorgangs wird die Hauptluftleitung HLL entlüftet, wodurch der Druck in der Hauptluftleitung HLL, ausgehend vom Regelbetriebsdruck, abnimmt. Dieser Druckabfall betrifft den Raum 36 hinter der Steuerkammer SK, die Verbindungskammer 25 und den ersten Raum 28 der Beschleunigungseinrichtung 1.

Der Druck in der Steuerkammer SK beginnt ebenfalls abzunehmen, jedoch erfolgt diese Druckabnahme aufgrund der Düse 21 des Überwachventils 23 im Verhältnis zum Raum 36 hinter der Steuerkammer SK langsamer. Dies hat zur Folge, dass der Kolben 26 nicht mehr mit gleichen Drücken an beiden Seiten beaufschlagt ist. In der Steuerkammer SK herrscht nun ein höherer Druck, näherungsweise der Regelbetriebsdruck, als in dem Raum 36 hinter der Steuerkammer SK.

Aufgrund dieser Druckdifferenz am Kolben 26 beginnt sich dieser, entgegen der Feder 12, nach oben zu bewegen, wobei er über die Verbindung 27 den Ventilteller 3 der Beschleunigungseinrichtung 1 in gleichem Maße anhebt. Die Steuerhülse 4 verbleibt dabei an ihrer dargestellten Position, da sie durch die Anlage des ersten Endes 8a des Arretierstiftes 8 nach wie vor festgehalten wird.

Die Verbindung 27 kann, wie schematisch dargestellt, durch eine Traverse realisiert werden. Eine andere vorteilhafte Ausführung ist auch dadurch möglich, dass die geometrische Anordnung des Ventiltellers 3 und Kolbens 26 koaxial übereinander ist, und die Verbindung durch Stößel, welche parallel zur Kolbenstange des Kolbens 26 um diese herum angeordnet sind, realisiert wird.

Dadurch öffnet sich das Beschleunigungsventil 3, 5 und Druckluft der Hauptluftleitung HLL strömt über den ersten Raum 28 der Beschleunigungseinrichtung 1, das geöffnete Beschleunigungsventil 3, 5, die Düse 6, die Steuerhülse 4, die Feder 7 und den zweiten Raum 30 der Beschleunigungseinrichtung 1 an die Atmosphäre AT ab.

Die Beschleunigungseinrichtung 1 stellt somit eine zum Führerbremsventil der Lokomotive zusätzliche Entlüftung der Hauptluftleitung HLL zur Verfügung, wodurch die effektive Querschnittsfläche, über die Druckluft abströmt, vergrößert und eine hohe Durchschlagsgeschwindigkeit des Bremssignals im Zug erreicht wird.

Mit dem Absenken des Druckes in der Hauptluftleitung HLL ist zudem ein Anstieg des Drucks im Bremszylinder BZ verbunden. Eine Ansteuerung einer Druckluftversorgung des Bremszylinders BZ, wie für Steuerventile dieser Bauart typisch, ist in dieser Zeichnung aus Gründen der Übersichtlichkeit nicht dargestellt.

Aufgrund des steigenden Drucks im Bremszylinder BZ, steigt auch der Druck im ersten Raum 32 der Arretiereinrichtung 2, wodurch sich über die Kolbenfläche des Steuerkolbens 9 eine Kraft nach links auf den Steuerkolben 9 und somit auf den Arretierstift 8 aufbaut, welche der Kraft der Feder 10 entgegenwirkt.

Ab einem gewissen Druck im Bremszylinder BZ ist die Druckkraft auf den Steuerkolben 9 so groß, dass der Arretierstift 8 nicht mehr ausreichend stark auf die Steuerhülse 4 gepresst wird, um diese entgegen der Kraft der Feder 7 festzuhalten. Die Steuerhülse 4 beginnt, sich nach oben, auf den Ventilteller 3 zuzubewegen, wobei ein Abgleiten der Steuerhülse 4 am ersten Ende 8a des Arretierstiftes 8 stattfindet.

Im weiteren Verlauf steigt der Druck im Bremszylinder BZ noch weiter an, wodurch der Steuerkolben 9 weiter nach links bewegt wird. Infolge dessen löst sich der Kontakt zwischen Arretierstift 8 und Steuerhülse 4 komplett, wodurch sich diese ungehindert, getrieben durch die Kraft der Feder 7, auf den Ventilteller 3 zubewegt.

Im weiteren Verlauf dieser Bewegung trifft der Ventilsitz 5 der Steuerhülse 4 auf den Ventilteller 3, wodurch das Beschleunigungsventil 3, 5 wieder verschlossen ist. Die Hauptluftleitung HLL kann nun nicht mehr über die Beschleunigungseinrichtung 1 entlüften, wodurch der Beschleunigungsvorgang beendet ist.

Die Verschiebung des Arretierstiftes nach links bewirkt zudem, dass sich das zweite Ende 8b des Arretierstiftes 8, welches als Ventildichtung ausgebildet ist, auf dem Ventildichtsitz 15 aufsetzt und dadurch das Überwachventil 23 verschließt. Dadurch ist eine weitere Entlüftung der Steuerkammer SK in die Verbindungskammer 25 und somit in die Hauptluftleitung HLL nicht mehr möglich.

In der Steuerkammer SK wird somit ein Druck, welcher im Wesentlichen dem Regelbetriebsdruck entspricht, gespeichert. Am Kolben 26 stellt sich dadurch eine stationäre Verschiebung aufgrund der Druckdifferenz zwischen Steuerkammer und Hauptluftleitung ein, welche als Signal zur weiteren Steuerung der Bremsung genutzt werden kann.

Vorzugsweise sind Beschleunigungseinrichtung 1 und Arretiereinrichtung 2 so aufeinander abgestimmt, dass die Steuerkammer SK unmittelbar nach Beendigung des Beschleunigungsvorgangs verschlossen wird.

Der nun in der Steuerkammer SK eingeschlossene Druck hält den Kolben 26 weiterhin in ausgerückter Stellung, da der Druck in dem Raum 36 hinter der Steuerkammer SK durch die entlüftete Hauptluftleitung HLL stets geringer ist als in der Steuerkammer SK. Die Bremse des Schienenfahrzeugs bleibt in dieser Stellung angelegt.

Das Lösen der Bremse erfolgt anschließend, ausgehend von dem oben beschriebenen Zustand, indem die Hauptluftleitung HLL wieder mit Druckluft auf Regelbetriebsdruck beaufschlagt wird und der Bremszylinder BZ entlüftet wird.

Durch den fallenden Druck des Bremszylinders BZ nimmt der Druck im ersten Raum 32 der Arretiereinrichtung 2 ab, wodurch der Steuerkolben 9 und somit der Arretierstift 8 beginnen sich aufgrund der Kraft der Feder 10 nach rechts zu bewegen.

Infolge dieser Bewegung öffnet der Arretierstift 8 mit seinem zweiten Ende 8b, welches als Ventildichtung ausgeführt ist, das Überwachventil 23, indem er sich wieder vom Ventilsitz 15 löst, wodurch die Steuerkammer SK wieder mit der Verbindungskammer 25 und somit mit der Hauptluftleitung HLL in Verbindung steht.

Die Hauptluftleitung HLL wird beim Lösevorgang der Bremse wieder mit Druckluft beaufschlagt, wodurch auch die Steuerkammer SK wieder mit Druckluft gefüllt wird. Ebenso wird Druckluft in den Raum 36 hinter der Steuerkammer SK gespeist, so dass sich ein Druckausgleich auf beiden Seiten des Kolbens 26 einstellt. Der Kolben 26 wird nun durch die Feder 12 in eine definierte Position verfahren.

Ebenso wie der Kolben 26, wird auch der Ventilteller 3 durch die Verbindung 27 nach unten bewegt. Da Ventilteller 3 und der Ventilsitz 5 der Steuerhülse 4 nach wie vor durch die Kraft der Feder 7 aneinander gepresst sind, vollführt der gesamte Komplex aus Ventilteller 3 und Steuerhülse 4 eine Bewegung nach unten. Dabei verfahren Kolben 26 und der Komplex aus Ventilteller 3 und Steuerhülse 4 so weit nach unten, bis sich ein Gleichgewicht aus den Kräften der Federn 7, 12 eingestellt hat. Der Kolben 26 und die Beschleunigungseinrichtung 1 sind somit wieder in der in Fig. 2 dargestellten Ausgangstellung.

Gleichzeitig hat sich der Arretierstift 8, durch die Kraft der Feder 10, weiter nach rechts bewegt, so dass sein erstes Ende 8a nun wieder mit der Seitenfläche der Steuerhülse 4 in Kontakt tritt. Dabei wird das erste Ende 8a des Arretierstiftes 8 derart auf die Steuerhülse 4 gepresst, dass sich dadurch ein Haftkontakt ausbildet, welcher die Steuerhülse 4 wieder in ihrer jetzigen Stellung zu fixieren vermag.

Das Steuerventil hat nun wieder seine Ausgangsstellung, wie in der Zeichnung gezeigt, eingenommen, die Hauptluftleitung HLL ist wieder mit Regelbetriebsdruck beaufschlagt und der Bremszylinder BZ ist entlüftet. Die Bremse ist wieder gelöst.

Verglichen mit der offenbarten Ausführungsform der Patentschriften DE 21 65 144 B und DE 21 65 092 B, vereint die gezeigte Ausführungsform mehrere Funktionen in einem Bauteil, dem Arretierstift 8, welcher zum einen die Arretierung und Freigabe der Steuerhülse 4 übernimmt und zum anderen die Steuerkammer SK mit der Hauptluftleitung HLL verbindet und von dieser trennt. Dadurch ist eine deutliche Reduzierung der Bauteile und somit der Komplexität des Steuerventils realisiert.

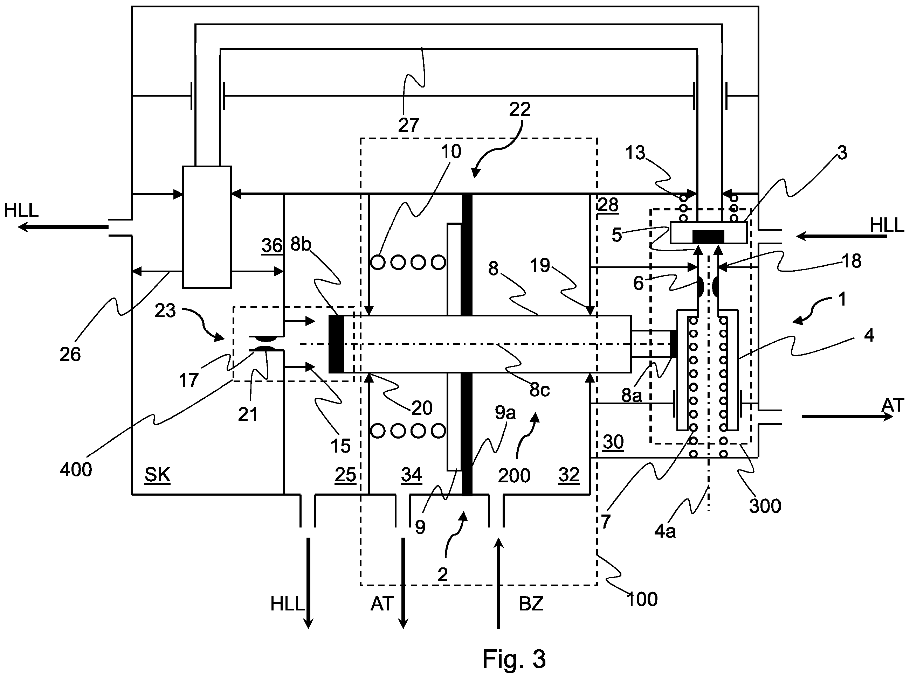

**Fig. 3** zeigt ein Funktionsschema einer Ausführungsform der Erfindung entsprechend Fig. 2.

Der Aufbau dieser Ausführungsform entspricht im Wesentlichen der aus Fig. 2. Daher wird im Folgenden lediglich auf die Unterschiede eingegangen.

Der Kolben 26 der Steuerkammer SK ist nun als Kolben mit gleitender Abdichtung zum Gehäuse hin ausgeführt. Auf eine Beaufschlagung des Kolbens 26 durch die Feder 12 wurde verzichtet, stattdessen wird nun der Ventilteller 3 mit einer Kraft einer Feder 13 beaufschlagt, welche den Ventilteller 3 und somit über die Verbindung 27 den Kolben 26 nach unten treibt.

Weiterhin ist der Steuerkolben 9 der Arretiereinrichtung 2 hier als Membrankolben mit Membrandichtung 9a ausgeführt. Zudem weist der Raum 39 der Arretiereinrichtung 2 hier eine Verbindung zur Atmosphäre AT auf.

Die weitere Funktionsweise dieser Ausführungsform entspricht der aus Fig. 2.

Im Übrigen ist die Ausgestaltung der Erfindung nicht auf die zuvor beschriebenen Ausführungsbeispiele beschränkt. Vielmehr lassen sich weitere Ausführungsbeispiele aus unterschiedlichen Kombinationen der Merkmale der zuvor beschriebenen Ausführungsbeispiele bilden.

### BEZUGSZEICHENLISTE

- 1: Beschleunigungseinrichtung
- 2: Arretiereinrichtung
- 3: Ventilteller
- 4: Steuerhülse
- 4a: Längsachse der Steuerhülse
- 5: Ventilsitz
- 6: Düse Steuerhülse
- 7: Feder Steuerhülse
- 8: Arretierstift
- 8a: erstes Ende des Arretierstiftes
- 8b: zweites Ende des Arretierstiftes
- 8c: Längsachse des Arretierstiftes
- 9: Steuerkolben
- 9a: Membrandichtung Steuerkolben
- 10: Feder Steuerkolben
- 12: Feder Kolben der Steuerkammer
- 13: Feder Ventilteller
- 15: Ventildichtsitz
- 17: Leitungskanal
- 18, 19, 20: gleitende Abdichtung
- 21: Düse Steuerkammer
- 22: Kammer
- 23: Überwachungsventil
- 25: Verbindungskammer
- 26: Kolben der Steuerkammer
- 26a: Membrandichtung der Steuerkammer
- 27: Verbindung
- 28: erster Raum der Beschleunigungseinrichtung
- 30: zweiter Raum der Beschleunigungseinrichtung
- 32: erster Raum der Arretiereinrichtung
- 34: zweiter Raum der Arretiereinrichtung
- 36: Raum hinter der Steuerkammer
- 100: Druck-/Signal-Umformer
- 200: Betätigungselement
- 300: erstes Schaltorgan
- 400: zweites Schaltorgan
- 500: Signal Druck-Kraft/Weg-Umformer - Betätigungselement
- 501: Signal Betätigungselement - erstes Schaltorgan
- 502: Signal Betätigungselement - zweites Schaltorgan
- 600: Druckluftverbindung
- 601: Druckluftverbindung
- 602: Druckluftverbindung
- 603: Druckluftverbindung
- 604: Druckluftverbindung
- SK: Steuerkammer
- HLL: Hauptluftleitung
- BZ: Bremszylinder
- AT: Atmosphäre

## Patentansprüche

1. Steuerventil für Druckluftbremsen von Schienenfahrzeugen, aufweisend:
- einen Druck-Kraft/Weg-Umformer (100), der dazu ausgebildet ist, einen Druck in ein Betätigungssignal (500) zur Betätigung eines Betätigungselements (200) umzuformen,
- ein erstes Schaltorgan (300), das dazu ausgebildet ist, wenn es aus einer Arretierung freigegeben wird, eine fluidische Verbindung (601, 602) einer Hauptluftleitung (HLL) mit der Atmosphäre (AT) und/oder einer Entlüftungseinrichtung zu unterbrechen,
- ein zweites Schaltorgan (400), das dazu ausgebildet ist, bei Betätigung eine fluidische Verbindung (603, 604) einer Steuerkammer (SK) mit der Hauptluftleitung (HLL) herzustellen und zu unterbrechen,
**dadurch gekennzeichnet, dass**
das Betätigungselement (200) dazu ausgebildet ist, sowohl das erste Schaltorgan (300) zu arretieren und freizugeben, als auch das zweite Schaltorgan (400) zu betätigen.

2. Steuerventil gemäß Anspruch 1, wobei
der Druck des Druck-Kraft/Weg-Umformers (100), aus dem das Betätigungssignal (500) gebildet wird,
ein Differenzdruck in der Hauptluftleitung (HLL) zu einem Regelbetriebsdruck, oder
ein Druck mindestens eines Bremszylinders (BZ) oder einer Bremsleitung, oder
ein den Druck mindestens eines Bremszylinders (BZ) vorsteuernder, oder zeitlich beeinflussender Druck ist, und/oder
das Steuerventil ein Gehäuse aufweist.

3. Steuerventil gemäß Anspruch 1 oder 2, wobei
das Betätigungssignal (500) des Druck-Kraft/Weg-Umformers (100) als mechanisches und/oder pneumatisches Signal ausgebildet ist.

4. Steuerventil gemäß einem der vorangegangenen Ansprüche, wobei
das Betätigungselement (200) einen im Gehäuse verschiebbaren Arretierstift (8) aufweist.

5. Steuerventil gemäß einem der vorangegangenen Ansprüche, wobei
der Druck-Kraft/Weg-Umformer (100) einen Steuerkolben (9) aufweist, welcher sich über eine Feder (10) entgegen dem Druck zur Umformung in ein Betätigungssignal (500) im Gehäuse abstützt.

6. Steuerventil gemäß einem der vorangegangenen Ansprüche, wobei
das erste Schaltorgan (300) eine Kombination eines Ventiltellers (3) und eines Ventilsitzes (5) aufweist, die ein Ventil (3, 5) ausbilden, das dazu ausgebildet ist, die fluidische Verbindung (601, 602) herzustellen und zu unterbrechen.

7. Steuerventil gemäß mindestens einem der Ansprüche 4 bis 6, wobei
das zweite Schaltorgan (400) eine Kombination eines Ventilsitzes (15) mit einem zweiten Ende (8b) des Arretierstiftes (8), welches als Ventildichtung ausgeführt ist, aufweist, die ein Ventil (8b, 15) ausbilden, das dazu ausgebildet ist, die fluidische Verbindung (603, 604) herzustellen und zu unterbrechen.

8. Steuerventil gemäß Anspruch 6 oder 7, wobei
der Ventilsitz (5) ein Ende einer im Gehäuse in Richtung des Ventiltellers (3) verschiebbaren Steuerhülse (4) bildet, und
die Steuerhülse (4) sich über eine Feder (7) im Gehäuse abstützt, und/oder
in ihrem Inneren eine Düse (6) aufweist, und
die Feder (7) auf die Steuerhülse (4) eine Kraft ausübt, die in Richtung des Ventiltellers (3) orientiert ist.

9. Steuerventil gemäß Anspruch 8, wobei
durch die Kraft der Feder (10) ein Kontakt zwischen einem ersten Ende (8a) des Arretierstiftes (8) und der Außenfläche der Steuerhülse (4) ausgebildet ist, und
dieser Kontakt die Steuerhülse (4) gegen eine Verschiebung durch die Feder (7) reib- und/oder formschlüssig arretiert.

10. Steuerventil gemäß einem der Ansprüche 8 oder 9, wobei
die Feder (10) derart ausgebildet ist, dass sich der Steuerkolben (9) ab einem bestimmten Druck zur Umformung in ein Betätigungssignal (500), und damit der Arretierstift (8) weg von der Steuerhülse (4) bewegen, so dass sich der Kontakt zwischen dem ersten Ende (8a) des Arretierstiftes (8) und der Steuerhülse (4) löst.

11. Steuerventil gemäß Anspruch 10, wobei
der bestimmte Druck zur Umformung in ein Betätigungssignal (500), der minimal mögliche Druck des Bremszylinders (BZ), oder ein diesen vorsteuernden, ggf. zeitlich beeinflussenden Druck ist, ab dem sich eine bestimmte Bremswirkung an einer diesem Bremszylinder (BZ) zugeordneten Bremse einstellt.

12. Steuerventil gemäß einem der Ansprüche 6 bis 11, wobei
der Ventilteller (3) translatorisch verschiebbar und/oder schwenkbar ausgeführt ist.

13. Steuerventil gemäß einem der Ansprüche 6 bis 12, wobei
eine Verbindung (27) zwischen einem Kolben (26) der Steuerkammer (SK) und dem Ventilteller (3) vorgesehen ist, wobei
die Verbindung (27) als starre mechanische Verbindung, oder
als mechanische Übersetzung zwischen der Bewegung des Kolbens (26) und dem Ventilteller (3), oder
als Stößelverbindung ausgeführt ist, wobei ein Stößel mit dem Ventilteller (3) oder mit dem Kolben (26) eine feste Verbindung ausbildet und an den jeweils anderen ab einer vorbestimmten Verschiebung stößt und anschließend diesen mit verschiebt, und/oder
Ventilteller (3) und Kolben (26) eine gemeinsame Achse aufweisen, entlang derer sie verschiebbar ausgebildet sind.

14. Steuerventil gemäß einem der Ansprüche 5 bis 13, wobei
der Steuerkolben (9) als Membrankolben, oder
als Kolben mit gleitender Abdichtung zur Gehäusewand ausgeführt ist.

15. Steuerventil gemäß einem der Ansprüche 13 oder 14, wobei
der Kolben (26) als Membrankolben, oder
als Kolben mit gleitender Abdichtung zur Gehäusewand ausgeführt ist, und/oder
sich direkt, oder über zwischengeschaltete Elemente über eine Feder (12, 13) im Gehäuse abstützt

16. Steuerventil gemäß einem der Ansprüche 6 bis 15, wobei
das Ventil (3, 5) dazu ausgebildet ist, direkt, oder über zwischengeschaltete Elemente über eine Feder (12, 13) mit einer elastischen Vorspannkraft verschlossen zu werden.

17. Steuerventil gemäß Anspruch 16, wobei
die Steuerhülse (4) zweistückig ausgebildet ist, und
ein erster Teil dazu ausgebildet ist, sich auf der Feder (7) im Gehäuse abzustützen und mit dem ersten Ende (8a) des Arretierstiftes (8) in Kontakt zu treten, und
ein zweiter Teil dazu ausgebildet ist, sich auf einer weiteren Feder im Gehäuse abzustützen, die den zweiten Teil in Richtung des Ventiltellers (3) mit einer Kraft beaufschlagt und den Ventilsitz (5) aufweist, wobei
eine Verbindung zwischen beiden Teilen ausgebildet ist, die eine beschränkte Relativbewegung in Richtung des Ventiltellers (3) und von diesem weg erlaubt.

18. Steuerventil gemäß einem der vorangegangenen Ansprüche, wobei
die Steuerkammer (SK) über eine Düse (21) direkt, oder über zwischengeschaltete Elemente, mit der Hauptluftleitung (HLL) in Verbindung steht.

19. Schienenfahrzeug, aufweisend eine pneumatische Bremsanlage mit einem Steuerventil nach einem der Ansprüche 1 bis 18.

## Claims

1. Control valve for compressed air brakes of rail vehicles, having:
- a pressure-force/displacement converter (100) designed to convert a pressure into an actuating signal (500) for actuating an actuating element (200),
- a first switching member (300) designed, when it is released from a lock, to interrupt a fluidic connection (601, 602) of a main air line (HLL) to the atmosphere (AT) and/or a venting device,
- a second switching member (400) designed, upon actuation, to establish and interrupt a fluidic connection (603, 604) of a control chamber (SK) to the main air line (HLL),
**characterised in that**
the actuating element (200) is designed both to lock and release the first switching member (300) and to actuate the second switching member (400).

2. Control valve according to claim 1, wherein
the pressure of the pressure-force/displacement converter (100) from which the actuating signal (500) is formed is
a differential pressure in the main air line (HLL) with respect to a control operating pressure, or
a pressure of at least one brake cylinder (BZ) or of a brake line, or
a pressure which pilot-controls, or temporally influences, the pressure of at least one brake cylinder (BZ), and/or
the control valve has a housing.

3. Control valve according to claim 1 or 2, wherein
the actuating signal (500) of the pressure-force/displacement converter (100) is designed as a mechanical and/or pneumatic signal.

4. Control valve according to any of the preceding claims, wherein
the actuating element (200) has a locking pin (8) which is displaceable in the housing.

5. Control valve according to any of the preceding claims, wherein
the pressure-force/displacement converter (100) has a control piston (9) supported in the housing via a spring (10) counter to the pressure for conversion into an actuating signal (500).

6. Control valve according to any of the preceding claims, wherein
the first switching member (300) has a combination of a valve disc (3) and of a valve seat (5) forming a valve (3, 5), which is designed to establish and interrupt the fluidic connection (601, 602).

7. Control valve according to any of claims 4 to 6, wherein
the second switching member (400) has a combination of a valve seat (15) with a second end (8b) of the locking pin (8), said second end being configured as a valve seal, which form a valve (8b, 15) designed to establish and interrupt the fluidic connection (603, 604).

8. Control valve according to claim 6 or 7, wherein
the valve seat (5) forms an end of a control sleeve (4) displaceable in the housing in the direction of the valve disc (3), and
the control sleeve (4) is supported in the housing via a spring (7), and/or
has a nozzle (6) in its interior, and
the spring (7) applies a force to the control sleeve (4) that is oriented in the direction of the valve disc (3).

9. Control valve according to claim 8, wherein
a contact between a first end (8a) of the locking pin (8) and the outer surface of the control sleeve (4) is formed by the force of the spring (10), and
said contact locks the control sleeve (4) in a frictional and/or positive manner against a displacement by the spring (7).

10. Control valve according to claim 8 or 9, wherein
the spring (10) is designed such that the control piston (9) moves, starting from a specific pressure for conversion into an actuating signal (500), and hence the locking pin (8) moves away from the control sleeve (4), so that the contact between the first end (8a) of the locking pin (8) and the control sleeve (4) is released.

11. Control valve according to claim 10, wherein
the specific pressure for conversion into an actuating signal (500) is the minimum possible pressure of the brake cylinder (BZ), or a pressure which pilot-controls, and possibly temporally influences, said pressure and starting from which a specific braking action is set at a brake assigned to said brake cylinder (BZ).

12. Control valve according to any of claims 6 to 11, wherein
the valve disc (3) is configured to be translationally displaceable and/or pivotable.

13. Control valve according to any of claims 6 to 12, wherein
a connection (27) is provided between a piston (26) of the control chamber (SK) and the valve disc (3), wherein
the connection (27) is designed as a rigid mechanical connection, or
as a mechanical transmission ratio between the movement of the piston (26) and the valve disc (3), or
as a tappet connection, wherein one tappet forms a fixed connection with the valve disc (3) or with the piston (26) and pushes against the respective other one starting from a predetermined displacement and then concomitantly displaces it, and/or
the valve disc (3) and piston (26) have a common axis along which they are designed to be displaceable.

14. Control valve according to any of claims 5 to 13, wherein
the control piston (9) is configured as a membrane piston, or
as a piston with sliding sealing with respect to the housing wall.

15. Control valve according to claim 13 or 14, wherein
the piston (26) is configured as a membrane piston, or
as a piston with sliding sealing with respect to the housing wall, and/or
is supported in the housing directly, or via interposed elements via a spring (12, 13).

16. Control valve according to any of claims 6 to 15, wherein
the valve (3, 5) is designed to be closed directly, or via interposed elements via a spring (12, 13) with an elastic preloading force.

17. Control valve according to claim 16, wherein
the control sleeve (4) is of two-piece design, and
a first part is designed to be supported in the housing on the spring (7) and to come into contact with the first end (8a) of the locking pin (8), and
a second part is designed to be supported in the housing on a further spring which applies a force to the second part in the direction of the valve disc (3) and has the valve seat (5), wherein
a connection between the two parts is formed which allows a limited relative movement towards and away from the valve disc (3).

18. Control valve according to any of the preceding claims, wherein
the control chamber (SK) is in connection with the main air line (HLL) directly via a nozzle (21), or via interposed elements.

19. Rail vehicle having a pneumatic brake system with a control valve according to any of claims 1 to 18.

## Revendications

1. Soupape de commande de freins à air comprimé de véhicules ferroviaires, comportant :
- un transducteur (100) pression-force/trajet, qui est constitué pour transformer une pression en un signal (500) d'actionnement d'un élément (200) d'actionnement,
- un premier organe (300) de coupure, qui est constitué pour, lorsqu'il est libéré d'un blocage, interrompre une communication (601, 602) fluidique d'un conduit (HLL) d'air principal avec l'atmosphère (AT) et/ou avec un dispositif de purge,
- un deuxième organe (400) de coupure, qui est constitué pour, lorsqu'il est actionné, produire et interrompre une communication (603, 604) fluidique d'une chambre (SK) de commande avec le conduit (HLL) d'air principal,
**caractérisée en ce que**
l'élément (200) d'actionnement est constitué aussi bien pour bloquer et libérer le premier organe (300) de coupure qu'également actionner le deuxième organe (400) de coupure.

2. Soupape de commande suivant la revendication 1, dans laquelle
la pression du transducteur (100) pression-force/trajet, à partir duquel le signal (500) d'actionnement est formé,
est une différence de pression dans le conduit (HLL) d'air principal par rapport à une pression de fonctionnement de réglage, ou
une pression d'au moins un cylindre (BZ) de frein ou d'un conduit de frein, ou
une pression pilotant la pression d'au moins un cylindre (BZ) de frein ou l'influençant dans le temps, et/ou
la soupape de commande a un boîtier.

3. Soupape de commande suivant la revendication 1 ou 2, dans laquelle
le signal (500) d'actionnement du transducteur (100) pression-force/trajet est constitué sous la forme d'un signal mécanique et/ou pneumatique.

4. Soupape de commande suivant l'une des revendications précédentes, dans laquelle
l'élément (200) d'actionnement a une broche (8) de blocage pouvant coulisser dans le boîtier.

5. Soupape de commande suivant l'une des revendications précédentes, dans laquelle
le transducteur (100) pression-force/trajet a un piston (9) de commande, qui s'appuie dans le boîtier par l'intermédiaire d'un ressort (10) à l'encontre de la pression pour la transformation en un signal (500) d'actionnement.

6. Soupape de commande suivant l'une des revendications précédentes, dans laquelle
le premier organe (300) de coupure a une combinaison d'un plateau (3) de soupape et d'un siège (5) de soupape, qui forment une soupape (3, 5), qui est constituée pour produire et interrompre la communication (601, 602) fluidique.

7. Soupape de commande suivant au moins l'une des revendications 4 à 6, dans laquelle
le deuxième organe (400) de coupure a une combinaison d'un siège (15) de soupape à une deuxième extrémité (8b) de la broche (8) de blocage, qui est réalisée en étanchéité de soupape, qui forment une soupape (8b, 15), qui est constituée pour produire et interrompre la communication (603, 604) fluidique.

8. Soupape de commande suivant la revendication 6 ou 7, dans laquelle
le siège (5) de la soupape forme une extrémité d'un manchon (4) de commande pouvant coulisser dans le boîtier en direction du plateau (3) de la soupape, et
le manchon (4) de commande s'appuie dans le boîtier par l'intermédiaire d'un ressort (7), et/ou
a à l'intérieur une buse (6), et
le ressort (7) applique au manchon (4) de commande une force orientée dans la direction du plateau (3) de la soupape.

9. Soupape de commande suivant la revendication 8, dans laquelle
il est constitué par la force du ressort (10) un contact entre une première extrémité (8a) de la broche (8) de blocage et la surface extérieure du manchon (4) de commande, et
ce contact bloque à coopération de frottement et/ou de forme le manchon (4) de commande à l'encontre d'un déplacement par le ressort (7).

10. Soupape de commande suivant l'une des revendication 8 ou 9, dans laquelle
le ressort (10) est constitué de manière à ce que le piston (9) de commande, à partir d'une pression déterminée pour la transformation en un signal (500) d'actionnement, et ainsi la broche (8) de blocage s'éloignent du manchon (4) de commande, de façon à faire cesser le contact entre la première extrémité (8a) de la broche (8) de blocage et le manchon (4) de commande.

11. Soupape de commande suivant la revendication 10, dans laquelle
la pression déterminée pour la transformation en un signal (500) d'actionnement est la pression la plus petite possible du cylindre (BZ) de frein ou une pression la pilotant, le cas échéant l'influençant dans le temps, à partir de laquelle un effet de freinage déterminé s'établit sur un frein associé à ce cylindre (BZ) de frein.

12. Soupape de commande suivant l'une des revendications 6 à 11, dans laquelle
le plateau (3) de la soupape est réalisé coulissant en translation et/ou pivotant.

13. Soupape de commande suivant l'une des revendications 6 à 12, dans laquelle
il est prévu une liaison (27) entre un piston (26) de la chambre (SK) de commande et le plateau (3) de la soupape, dans laquelle
la liaison est réalisée sous la forme d'une liaison mécanique, ou
sous la forme d'une transmission mécanique entre le déplacement du piston (26) et le plateau (3) de la soupape, ou
sous la forme d'une liaison par poussoir, dans laquelle un poussoir constitue avec le plateau (3) de la soupape ou avec le piston (26) une liaison fixe et pousse l'autre à partir d'un déplacement déterminé à l'avance et ensuite se déplace avec celui-ci et/ou le plateau (3) de la soupape et le piston (26) ont un axe commun le long duquel elles sont constituées de manière à pouvoir se déplacer.

14. Soupape de commande suivant l'une des revendications 5 à 13, dans laquelle
le piston (9) de commande est réalisé sous la forme d'un piston à membrane, ou
sous la forme d'un piston à étanchéité glissante par rapport à la paroi du boîtier.

15. Soupape de commande suivant l'une des revendications 13 ou 14, dans laquelle
le piston (26) est réalisé sous la forme d'un piston à membrane, ou
sous la forme d'un piston à étanchéité glissante par rapport à la paroi du boîtier et/ou s'appuie directement ou par des éléments intermédiaires sur un ressort (12, 13) dans le boîtier.

16. Soupape de commande suivant l'une des revendications 6 à 15, dans laquelle
la soupape (3, 5) est constituée pour être fermée directement ou par des éléments intermédiaires par le biais d'un ressort (12, 13) avec une force élastique de précontrainte.

17. Soupape de commande suivant la revendication 16, dans laquelle
le manchon (4) de commande est constitué en deux pièces, et
une première partie est constituée pour s'appuyer dans le boîtier sur le ressort (7) et pour entrer en contact avec la première extrémité (8a) de la broche (8) de blocage, et
une deuxième partie est constituée pour s'appuyer dans le boîtier sur un autre ressort, qui applique à la deuxième partie une force en direction du plateau (3) de la soupape et a le siège (5) de la soupape, dans laquelle
il est constitué entre les deux parties une liaison, qui permet un mouvement relatif limité en direction du plateau (3) de la soupape et en s'en éloignant.

18. Soupape de commande suivant l'une des revendications précédentes, dans laquelle
la chambre (SK) de commande communique par une buse (21) directement ou par des éléments intermédiaires avec le conduit (HLL) d'air principal.

19. Véhicule ferroviaire comportant un système pneumatique de frein ayant une soupape de commande suivant l'une des revendications 1 à 18.
